(19) Europäisches Patentamt
European Patent Office
Office européen des brevets

(11) **EP 2 362 555 B1**

(12) **FASCICULE DE BREVET EUROPEEN**

(45) Date de publication et mention
de la délivrance du brevet:
**20.12.2017   Bulletin 2017/51**

(51) Int Cl.:
**H04B 7/185** *(2006.01)*      **H04B 1/12** *(2006.01)*

(21) Numéro de dépôt: **11154788.1**

(22) Date de dépôt: **17.02.2011**

(54) **PROCÉDÉ DE RECOUVREMENT D'UN SIGNAL PARMI UN ENSEMBLE DE SIGNAUX COLLECTES PAR SATELLITE**

VERFAHREN ZUR RÜCKGEWINNUNG EINES SIGNALS AUS MEHREREN DURCH EINEN SATELLITEN EMPFANGENEN SIGNALEN

METHOD FOR RECOVERING A SIGNAL AMONG A PLURALITY OF SIGNALS RECEIVED BY A SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.02.2010   FR 1000702**

(43) Date de publication de la demande:
**31.08.2011   Bulletin 2011/35**

(73) Titulaire: **Thales**
**92400 Courbevoie (FR)**

(72) Inventeurs:
• **Calmettes, Thibaud**
**31400 Toulouse (FR)**
• **Challamel, Rémi**
**31000 Toulouse (FR)**

(74) Mandataire: **Henriot, Marie-Pierre et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**EP-A1- 2 093 889      US-A1- 2006 252 368**
**US-A1- 2009 161 797**

**Description**

Le domaine de l'invention est celui des communications par satellite. Il s'agit plus spécifiquement de réduire voire d'éliminer l'effet des collisions de signaux reçus simultanément par le satellite et qui rendent impossible leur démodulation.

Ce problème apparaît notamment avec un système de communication tel que le Système d'Identification Automatique aussi désigné AIS acronyme de l'expression anglo-saxonne Automatic Identification System. L'AIS est un système d'échanges automatisés de messages entre navires par radio qui permet de limiter les collisions entre navires et qui permet une surveillance du trafic maritime en vue des côtes grâce à des stations côtières qui écoutent les communications échangées. La collecte par satellite de ces données permet une surveillance maritime loin des côtes et une vérification des données transmises par l'analyse du signal reçu. Les messages AIS, qui sont diffusés de manière publique, contiennent la position du navire émetteur, ainsi que son identifiant, son cap, sa vitesse, ...

Lorsque des messages (ou signaux) sont émis par des navires naviguant dans des zones denses telles que la Méditerranée ou le long des côtes, il existe alors une forte probabilité de blocages mutuels des signaux à la réception dans le satellite. En effet, la tâche des circuits d'entrée du récepteur d'un satellite est telle qu'en moyenne une vingtaine de signaux arrivent simultanément au récepteur, ce qui rend impossible leur démodulation.

Pour permettre à l'AIS par satellite d'avoir des performances acceptables compte tenu des exigences de performance pour la sécurité maritime, il est nécessaire de limiter lesdits blocages mutuels (c'est-à-dire la probabilité que plusieurs signaux soient reçus en même temps) ou au moins de limiter leur effet.

Les solutions étudiées actuellement qui permettent de limiter les collisions sont de deux ordres :

- modification du système : une solution propose de modifier les émetteurs des navires pour leur rajouter un canal et de définir un nouveau protocole pour émettre un message plus adapté à l'écoute spatiale. Cette solution a cependant un coût et une durée de déploiement importants, et elle pourra être contournée en émettant des messages différents sur les canaux AIS classiques et les canaux AIS pour le satellite.
- modification du récepteur : une partie importante des collisions de signaux peut être éliminée grâce à des solutions de récepteurs bord plus complexes, tant en termes de solution d'antennes que de traitements. Cette solution est cependant coûteuse en complexité de charge utile et le plus souvent en complexité du segment sol de mission satellite.

Le document US2009/161797 divulgue un procédé de recouvrement d'un signal utile reçu par un satellite selon l'art antérieur. En conséquence, il demeure à ce jour un besoin pour un système donnant simultanément satisfaction à l'ensemble des exigences précitées, à savoir élimination des effets des collisions sur les signaux émis actuellement sans augmentation drastique de la complexité de la charge utile du satellite.

L'idée qui sous-tend l'invention consiste à recréer les signaux reçus par les stations sol tels qu'ils ont été vus par le satellite et à retirer ces signaux du signal composite collecté par le satellite afin d'éliminer la majeure partie des signaux de collision et ne conserver que le signal non vu par une station sol.

Plus précisément, l'invention a pour objet un procédé de recouvrement d'un signal utile reçu par un satellite qui comprend une étape de réception par le satellite d'un signal composite comprenant ledit signal utile et un nombre quelconque de signaux dits de collision, tous ces signaux étant reçus simultanément par le satellite, interférant entre eux, et étant respectivement émis par des émetteurs. Il est principalement caractérisé en ce qu'il comprend les étapes suivantes :

- réception directe par au moins une station d'un réseau terrestre, des signaux correspondant à au moins une partie desdits signaux de collision et désignés signaux de collision collectés,
- pour chaque signal de collision collecté, estimation par une unité de traitement reliée au réseau terrestre et au satellite, de ce signal de collision reçu par le satellite, en fonction :

    i. du signal de collision collecté reçu directement par la station terrestre,
    ii. de la position de l'émetteur à la date d'émission de ce signal de collision et
    iii. de la position du satellite lors de la réception du signal composite,

- retrait des signaux de collision collectés estimés, dans le signal composite pour permettre le recouvrement du signal utile.

La position de l'émetteur peut être incluse dans le signal issu de cet émetteur ou être calculée par l'unité de traitement.

Dans certains cas, les signaux utiles et de collision sont émis de manière synchronisée sur une date fixée selon un système de positionnement.

Les signaux utile et de collision sont par exemple des signaux de type AIS ou de type ARGOS ou de téléphonie mobile.

Selon une caractéristique de l'invention, la date d'émission du signal est estimée par l'unité de traitement.

Le réseau terrestre peut être soit un réseau terrestre côtier existant tel que celui de l'AIS, soit un réseau terrestre à déployer placé plutôt en hauteur (montagne, colline) afin d'offrir une plus grande visibilité sur la zone maritime.

Lorsque seulement une partie des signaux de collision a été retirée du signal composite, le procédé comprend en outre éventuellement une étape de traitement permettant l'élimination des signaux de collision résiduels.

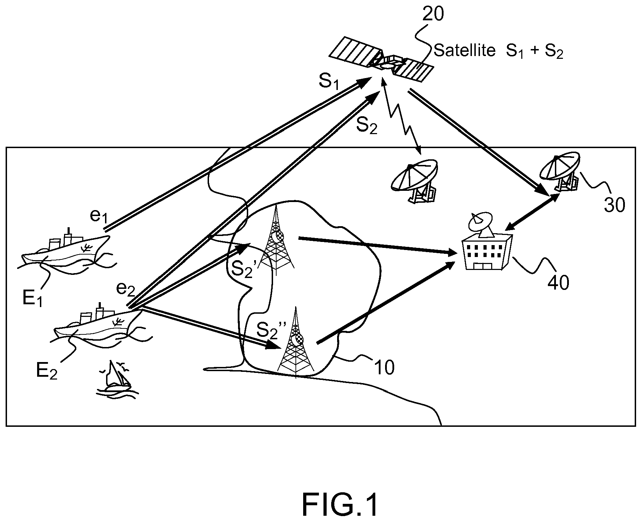

D'autres caractéristiques et avantages de l'invention apparaîtront à la lecture de la description détaillée qui suit, faite à titre d'exemple non limitatif et en référence à la figure 1 qui représente schématiquement un système de collecte de données par satellite.

De nombreux systèmes de collecte de données sont aujourd'hui utilisés à des fins diverses : étude de la faune, de l'environnement, balise de détresse pour navire, système de surveillance du trafic maritime ...etc. Le système Argos, qui fonctionne depuis 1979, en est un exemple bien connu. Il existe cependant d'autres systèmes de collecte de données tels que le système AIS, Automatic Identification System selon l'acronyme anglais, ou le système SAR, Search And Rescue selon l'acronyme anglais, par exemple. Le principe de fonctionnement d'un système de collecte de données est représenté de manière générale sur la figure 1.

Ainsi, sur ce schéma, des dispositifs de collecte de données équipent par exemple, une population animale, des bouées météorologiques, ou une flotte de bateaux de pêche. Les mesures effectuées par ces dispositifs sont encapsulées dans des signaux émis e1, e2, ..., par l'intermédiaire de dispositifs émetteurs adaptés E1, E2, ..., vers des satellites 20. Lesdits satellites 20 renvoient ces signaux, éventuellement modifiés, et éventuellement accompagnés de mesures sur le signal reçu S1, S2, ..., vers des stations de réception 30 au sol. Ces dernières font parvenir les signaux à des stations sol 40 qui présentent des moyens de traitement adaptés, permettant, par exemple, de localiser approximativement les objets d'une étude ou d'une surveillance. Après traitement des signaux transmis par les satellites 20 et les stations de réception 30, les stations sol 40 peuvent émettre des messages d'informations vers un réseau d'utilisateurs.

Par ailleurs, une partie des signaux, ici e2, e3, e4, .., respectivement émis par les émetteurs E2, E3, E4, ..., peuvent être également reçus par des stations terrestres, comme c'est le cas dans l'AIS pour assurer la surveillance maritime en vue des côtes.

L'ensemble des stations de réception 30 au sol recevant les signaux renvoyés par les satellites est désigné segment sol de mission satellite ; l'ensemble des stations côtières recevant directement les signaux émis par les émetteurs E1, E2, E3, E4, ..., est désigné réseau côtier ou terrestre 10. Les stations sol 40 sont reliées d'une part au segment sol de mission satellite et d'autre part au réseau terrestre 10.

On va détailler le procédé de recouvrement du signal utile dans le cadre d'un système AIS par satellite.

Le satellite 20 reçoit en même temps plusieurs signaux qui interfèrent entre eux pour former un signal composite S1+S2+S3+S4+.... Il y a parmi ces signaux, un signal dit utile et noté S1, les autres signaux S2, S3, S4, ... étant désignés signaux de collision. Ces signaux S1, S2, S3, S4, ... correspondent aux signaux e1, e2, e3, e4, ... respectivement émis par des émetteurs E1, E2, E3, E4,..., éventuellement mobiles.

Par ailleurs une ou plusieurs stations côtières plus généralement désignées stations terrestres reçoivent directement les signaux e2, e3, e4, ... émis par les émetteurs E2, E3, E4, ... correspondant aux signaux de collision S2, S3, S4, ... reçus par le satellite ; ces signaux reçus par cette station côtière sont notés S2', S3', S4', ...., et notés S2", ... lorsqu'ils sont reçus par une autre station côtière. Le signal e1 émis par E1 n'est pas reçu par une station côtière en raison par exemple de son éloignement.

Le réseau terrestre 10 peut être soit le réseau terrestre côtier existant de l'AIS, soit un réseau terrestre à déployer placé plutôt en hauteur (montagne, colline) afin d'offrir une plus grande visibilité sur la zone maritime.

Les signaux respectivement émis par les émetteurs E1 et E2 sont de la forme :

$$e_1(t) = A_{e1} \cos(\omega_{e1}\, t + \varphi_{e1} + \alpha_1\,(t)),$$

$$e_2(t) = A_{e2} \cos(\omega_{e2}\, t + \varphi_{e2} + \alpha_2\,(t)),$$

$A_e$ étant l'amplitude, $\omega_e$ la pulsation, $\varphi_e$ la phase initiale et $\alpha$ la modulation du signal.

Les pulsations $\omega_{e1}$ et $\omega_{e2}$ peuvent être différentes mais sont suffisamment proches pour générer des interférences perturbatrices.

A la réception par le satellite 20, ces signaux sont de la forme :

$$S1(t) = A_1 \cos(\omega_1\, t + \varphi_1 + \alpha_1\,(t)),$$

$$S2(t) = A_2 \cos(\omega_2\, t + \varphi_2 + \alpha_2\,(t)).$$

Le signal $e_2(t)$ émis par E2 est également reçu par une station côtière du réseau terrestre 10 : ce signal reçu S2'(t) est de la forme :

$$S2'(t) = A'_2 \cos(\omega'_2\, t + \varphi'_2 + \alpha_2\,(t)).$$

Le signal S2(t) reçu par le satellite est estimé (et noté $\hat{S}2$) par une unité de traitement d'une station sol 40, à partir :

- du signal S2'(t) reçu par une station côtière du réseau terrestre 10,
- de la position de l'émetteur E2 à l'instant d'émission de son signal $e_2(t)$ et
- de la position du satellite 20 lors de la réception du signal S2(t) fournie à partir de l'éphéméride du satellite.

Pour reconstruire le signal $\hat{S}2$ « tel qu'il a été vu par le satellite », on utilise en particulier une mesure de datation du signal S2' reçu au sol et l'information de position de l'émetteur. Dans le cas de l'AIS, ces deux tâches sont fortement facilitées par le fait qu'un système de positionnement (typiquement GPS) est associé à l'émetteur AIS, de sorte que l'émission des signaux est synchronisée sur le temps du système de positionnement et que le signal transmis contient la position de l'émetteur telle qu'estimée par ce système de positionnement.

On obtient : $\hat{S}2 = \hat{A}_2 \cos(\hat{\omega}_2 t + \hat{\varphi}_2 + \alpha_2(t))$

De même pour les autres signaux de collision S3, ... qui sont également estimés. On obtient donc aussi $\hat{S}3$, ...

Puis on élimine ces signaux de collision estimés du signal composite reçu par le satellite en calculant :

$$S1 + S2 + S3 + \ldots - \hat{S}2 - \hat{S}3 - \ldots \approx S1$$

On a ainsi recouvré le signal utile S1 reçu par le satellite 20.

Il n'est pas nécessaire de traiter, ou même de collecter l'ensemble des signaux de collision. Par exemple, si dans le cas à 3 signaux, on n'a collecté et estimé que le signal S2, on pourra appliquer l'invention en effectuant :

$$S1 + S2 + S3 - \hat{S}2 \approx S1 + S3$$

Le recouvrement de S1 parmi S1+S3 pourra éventuellement se faire par d'autres méthodes, telles que des procédés de démodulation conjointe.

Estimer le signal de collision S2 revient à déterminer :

-   la pulsation de la porteuse $\omega_2$,
-   la modulation $\alpha_2(t)$,
-   la phase initiale $\varphi_2$,
-   la puissance, c'est-à-dire l'amplitude A2.

On présente ici cette évaluation dans le cas de l'AIS par satellite.

Pour permettre la démodulation du signal utile (non éliminé) avec une bonne performance, on considère qu'il faut que les signaux de collision soient éliminés avec un résidu inférieur à 20 dB sous le signal utile.

On s'intéresse tout d'abord à la pulsation $\omega$.

Il y a deux contributions à cette pulsation : le décalage de la fréquence centrale du navire, fixe dans le temps, dans un domaine de +/-500 Hz par rapport au centre de la bande, et la dérive Doppler. Sur l'émission $e_2$, la dérive Doppler peut être estimée d'après la vitesse et le cap du navire fournis dans le signal, et l'estimation de la fréquence centrale d'émission pourrait donc être faite en une seule mesure lors de la réception par la station terrestre. Aucune mesure de fréquence n'est cependant réalisée aujourd'hui dans le réseau terrestre côtier, et ces mesures devraient être remplacées par la création et la mise à jour par itérations d'une table des fréquences centrales de chaque navire. Pour la dérive Doppler due au satellite, en considérant le cas pire d'un navire (E2 ou E3) au nadir, avec une erreur de position de 20 m, on va obtenir une erreur sur le Doppler estimé à bord du satellite de 0.12Hz, soit sur l'ensemble du signal un décalage de phase de 0.014 rad, soit un résidu de -37 dB ce qui est largement inférieur au seuil de -20 dB indiqué plus haut.

La modulation $\alpha$ du signal de collision reçu par le satellite est la même que celle du signal de collision reçu par une station au sol.

Concernant la synchronisation, on rappelle que les transmissions des signaux des navires se trouvant dans une même zone maritime sont effectuées selon un multiplexage basé sur l'attribution d'intervalles de temps (ou « slots » en anglais) TDMA. Pour avoir un résidu de phase initiale $\varphi$ de - 20 dB, il faut une erreur de synchronisation de 0.6% de la durée du bit, soit à 9600 bits/s une erreur de synchronisation de 0.66 $\mu$s. Comme les émissions des navires sont synchronisées sur le temps GPS (avec une précision de l'ordre de 50ns), le segment sol (les stations 30) n'a qu'à lever l'ambiguïté du slot d'émission. La seule source d'erreur est donc l'incertitude sur le temps de propagation entre le navire et le récepteur satellite, avec une tolérance de 200m. La précision du positionnement du navire est bien meilleure que ce seuil. En effet pour une erreur de positionnement de 20 m, le résidu de phase initiale est de - 30 dB, ce qui est largement inférieur au seuil de -20 dB indiqué plus haut.

L'amplitude A du signal peut-être estimée par un bilan de liaison, connaissant les caractéristiques antennaires de l'émetteur (navire) et du récepteur (satellite), ainsi que leur position au moment de l'émission et de la réception.

On a ainsi montré que le procédé selon l'invention permet d'éliminer les signaux de collision avec de bonnes performances.

Ce procédé s'applique également à des signaux de type ARGOS, les émetteurs E1, E2, E3, ... étant alors généralement des balises ARGOS. Le signal émis par une balise contient également la position de la balise. Dans le cas d'Argos, les signaux ne sont pas émis de manière synchrone sur le système de positionnement, et il convient donc d'ajouter une mesure précise de la date d'arrivée dans la station côtière.

Dans le cas de signaux de téléphonie mobile par satellite, le procédé s'applique également. Mais la position de l'émetteur c'est-à-dire du téléphone mobile n'est pas incluse dans le signal émis. Elle peut alors être calculée par l'unité de traitement par triangulation à partir du signal de collision directement reçu par au moins deux stations terrestres : S2' et S2" sur la figure.

**Revendications**

1. Procédé de recouvrement d'un signal utile (S1) reçu par un satellite (20) qui comprend une étape de réception par le satellite d'un signal composite comprenant ledit signal utile (S1) et des signaux dits de collision (S2, S3, S4, ...), tous ces signaux étant reçus simultanément par le satellite, interférant entre eux, et étant respectivement émis par des émetteurs (E1, E2, E3, E4, ...), **caractérisé en ce qu'**il comprend les étapes suivantes :

    - réception directe par au moins une station d'un réseau terrestre (10), des signaux correspondant à au moins une partie non nulle desdits signaux de collision et désignés signaux de collision collectés (S2', S3', ...),
    - pour chaque signal de collision collecté (S2', S3', ...), estimation par une unité de traitement reliée au réseau terrestre (10) et au satellite (20), de ce signal de collision reçu par le satellite, en fonction :

        i. du signal de collision collecté (S2', S3', ...) reçu directement par la station terrestre,
        ii. de la position de l'émetteur (E2, E3, ...) à la date d'émission de ce signal de collision et
        iii. de la position du satellite (20) lors de la réception du signal composite,

    - retrait des signaux de collision collectés et estimés (S2,S3, ...) dans le signal composite pour permettre le recouvrement du signal utile (S1).

2. Procédé de recouvrement d'un signal utile reçu par un satellite selon la revendication précédente, **caractérisé en ce que** la position de l'émetteur est incluse dans le signal issu de cet émetteur.

3. Procédé de recouvrement d'un signal utile reçu par un satellite selon l'une des revendications précédentes, **caractérisé en ce que** les signaux utile (S1) et de collision (S2, S3, ...) sont émis de manière synchronisée sur une date fixée selon un système de positionnement.

4. Procédé de recouvrement d'un signal utile reçu par un satellite selon l'une des revendications précédentes, **caractérisé en ce que** les signaux utile (S1) et de collision (S2, S3, ...) sont des signaux de type AIS.

5. Procédé de recouvrement d'un signal utile reçu par un satellite selon l'une des revendications 1 ou 2, **caractérisé en ce que** les signaux utile (S1) et de collision (S2, S3, ...) sont des signaux de type ARGOS.

6. Procédé de recouvrement d'un signal utile reçu par un satellite selon la revendication 1, **caractérisé en ce que** la position de l'émetteur est estimée par l'unité de traitement.

7. Procédé de recouvrement d'un signal utile reçu par un satellite selon la revendication précédente, **caractérisé en ce que** les signaux utile (S1) et de collision (S2, S3, ...) sont des signaux de téléphonie mobile.

8. Procédé de recouvrement d'un signal utile reçu par un satellite selon l'une des revendications précédentes, **caractérisé en ce que** la date d'émission du signal est estimée par l'unité de traitement.

9. Procédé de recouvrement d'un signal utile reçu par un satellite selon l'une des revendications précédentes, **caractérisé en ce que** seulement une partie des signaux de collision estimés a été retirée du signal composite, et **en ce qu'**il comprend en outre une étape de traitement permettant l'élimination des signaux de collision résiduels (S3).

**Patentansprüche**

1. Verfahren zur Rückgewinnung eines von einem Satelliten (20) empfangenen Nutzsignals (S1), das einen Empfangsschritt durch den Satelliten eines Verbundsignals umfasst, das das Nutzsignal (S1) und die als Kollisionssignale (S2, S3, S4, ...) bezeichneten Signale umfasst, wobei alle diese Signale gleichzeitig durch den Satelliten empfangen werden, und sich untereinander überlagern, und jeweils von Sendern (E1, E2, E3, E4, ...) ausgegeben werden, **dadurch gekennzeichnet, dass** es die folgenden Schritte umfasst:

    - einen direkten Empfang durch mindestens eine Station eines terrestrischen Netzwerks (10) von Signalen entsprechend mindestens einem Nicht-Null-Teil der Kollisionssignale, die als gesammelte Kollisionssignale (S2', S3', ...) bezeichnet werden,
    - für jedes gesammelte Kollisionssignal (S2', S3', ...) Schätzung durch eine Verarbeitungseinheit, die mit dem terrestrischen Netzwerk (10) und dem Satelliten (20) verbunden ist, dieses durch den Satelliten erhaltenen Kollisionssignals, in Abhängigkeit von folgendem:

        i. von dem gesammelten Kollisionssignal (S2', S3', ...), das direkt durch die terrestrische Station empfangen wird,

ii. von der Position des Senders (E2, E3, ...) am Emissionsdatum dieses Kollisionssignals und
iii. von der Position des Satelliten (20) beim Empfang des Verbundsignals,

- Entfernen der gesammelten und geschätzten Kollisionssignale (Ŝ2, Ŝ3, ...) von dem Verbundsignal, um die Rückgewinnung des Nutzsignals (S1) zu ermöglichen.

**2.** Verfahren zur Rückgewinnung eines von einem Satelliten empfangenen Nutzsignals nach dem vorherigen Anspruch, **dadurch gekennzeichnet, dass** die Position des Senders im Signal enthalten ist, das von diesem Sender ausgegeben wird.

**3.** Verfahren zur Rückgewinnung eines von einem Satelliten empfangenen Nutzsignals nach einem der vorherigen Ansprüche, **dadurch gekennzeichnet, dass** die Nutzsignale (S1) und Kollisionssignale (S2, S3, ...) auf synchronisierte Weise an einem festgelegten Datum gemäß einem Positionierungssystem ausgegeben werden.

**4.** Verfahren zur Rückgewinnung eines von einem Satelliten empfangenen Nutzsignals nach einem der vorherigen Ansprüche, **dadurch gekennzeichnet, dass** die Nutzsignale (S1) und Kollisionssignale (S2, S3, ...) Signale vom Typ AIS sind.

**5.** Verfahren zur Rückgewinnung eines von einem Satelliten empfangenen Nutzsignals nach einem der Ansprüche 1 oder 2, **dadurch gekennzeichnet, dass** das Nutzsignal (S1) und das Kollisionssignal (S2, S3, ...) Signale vom Typ ARGOS sind.

**6.** Verfahren zur Rückgewinnung eines von einem Satelliten empfangenen Nutzsignals nach Anspruch 1, **dadurch gekennzeichnet, dass** die Position des Senders durch die Verarbeitungseinheit geschätzt wird.

**7.** Verfahren zur Rückgewinnung eines von einem Satelliten empfangenen Nutzsignals nach dem vorherigen Anspruch, **dadurch gekennzeichnet, dass** das Nutzsignal (S1) und das Kollisionssignal (S2, S3, ...) Signale von Mobiltelefonen sind.

**8.** Verfahren zur Rückgewinnung eines von einem Satelliten empfangenen Nutzsignals nach einem der vorherigen Ansprüche, **dadurch gekennzeichnet, dass** das Emissionsdatum des Signals von der Verarbeitungseinheit geschätzt wird.

**9.** Verfahren zur Rückgewinnung eines von einem Satelliten empfangenen Nutzsignals nach einem der vorherigen Ansprüche, **dadurch gekennzeichnet,**

**dass** nur ein Teil der geschätzten Kollisionssignale von dem Verbundsignal entfernt wurden, und dass es u. a. einen Verarbeitungsschritt umfasst, der die Eliminierung der restlichen Kollisionssignale (S3) ermöglicht.

**Claims**

**1.** A method of recovering a useful signal (S1) received by a satellite (20) which comprises a step of reception by the satellite of a composite signal comprising said useful signal (S1) and so-called collision signals (S2, S3, S4, ...), all of these signals being received simultaneously by the satellite, interfering with each other, and respectively being transmitted by transmitters (E1, E2, E3, E4, ...), **characterized in that** it comprises the following steps:

- direct reception, by at least one station of a terrestrial network (10), of signals corresponding to at least a non-zero portion of said collision signals and referred to as collected collision signals (S2', S3', ...),
- for each collected collision signal (S2', S3', ...), estimation, by a processing unit connected to the terrestrial network (10) and to the satellite (20), of this collision signal received by the satellite as a function of:

i. the collected collision signal (S2', S3', ...) received directly by the terrestrial station,
ii. the position of the transmitter (E2, E3, ...) at the date of transmission of this collision signal, and
iii. the position of the satellite (20) during the reception of the composite signal,

- removing the collected and estimated collision signals (Ŝ2, Ŝ3, ...), from the composite signal, in order to allow the recovery of the useful signal (S1).

**2.** The method of recovering a useful signal received by a satellite according to the preceding claim, **characterized in that** the position of the transmitter is included in the signal coming from that transmitter.

**3.** The method of recovering a useful signal received by a satellite according to one of the preceding claims, **characterized in that** the useful (S1) and collision (S2, S3, ...) signals are transmitted such that they are synchronized on a fixed date according to a positioning system.

**4.** The method of recovering a useful signal received by a satellite according to one of the preceding claims, **characterized in that** the useful (S1) and collision (S2, S3, ...) signals are AIS-type signals.

5. The method of recovering a useful signal received by a satellite according to one of Claims 1 or 2, **characterized in that** the useful (S1) and collision (S2, S3, ...) signals are ARGOS-type signals.

6. The method of recovering a useful signal received by a satellite according to Claim 1, **characterized in that** the position of the transmitter is estimated by the processing unit.

7. The method of recovering a useful signal received by a satellite according to the preceding claim, **characterized in that** the useful (S1) and collision (S2, S3, ...) signals are mobile phone signals.

8. The method of recovering a useful signal received by a satellite according to one of the preceding claims, **characterized in that** the date of transmission of the signal is estimated by the processing unit.

9. The method of recovering a useful signal received by a satellite according to one of the preceding claims, **characterized in that** only a portion of the estimated collision signals has been removed from the composite signal, and **in that** it furthermore comprises a processing step allowing the elimination of the residual collision signals (S3).

## FIG.1

## RÉFÉRENCES CITÉES DANS LA DESCRIPTION

**Documents brevets cités dans la description**

- US 2009161797 A